# EUROPÄISCHE PATENTSCHRIFT

(11) **EP 0 646 055 B1**
(45) Veröffentlichungstag und Bekanntmachung des Hinweises auf die Patenterteilung: **14.01.1998**
(21) Anmeldenummer: 94912533.0
(22) Anmeldetag: 24.03.1994
(51) Int. Cl.: B23Q 7/14, B23Q 7/04, B65G 47/90

(54) **VERFAHREN UND VORRICHTUNG ZUM TRANSFER VON WERKSTÜCKEN**
PROCESS AND DEVICE FOR TRANSFERRING WORKPIECES
PROCEDE ET DISPOSITIF PERMETTANT DE TRANSFERER DES PIECES

(30) Priorität: 16.04.1993 DE 4312406
(43) Veröffentlichungstag der Anmeldung: 05.04.1995
(73) Patentinhaber: MIKRON S.A. AGNO, CH-6903 Lugano (CH)
(72) Erfinder: BERGMANN, Klaus, CH-6815 Melide (CH)
(74) Vertreter: Wilhelm & Dauster Patentanwälte European Patent Attorneys
(86) Internationale Anmeldenummer: EP9400940
(87) Internationale Veröffentlichungsnummer: WO9423893

(56) Entgegenhaltungen:
- DE-A- 2 505 528
- FR-A- 2 394 362
- US-A- 4 251 957
- US-A- 5 078 257

## Beschreibung

Die Erfindung betrifft ein Verfahren zum getakteten Transport von Werkstücken oder Werkstückträgern in Transferstraßen oder Transfermaschinen und eine Transferstraße oder Transfermaschine, die nach diesem Verfahren arbeitet, nach dem Oberbegriff des Patentanspruches 1 bzw. 2.

Verfahren und Vorrichtungen dieser Art in der Form von Transferstraßen sind bekannt (Bilsing A., Verkettung in der Umformtechnik, Werkstatt und Betrieb 118, (1985), 8, Seite 485 bis 487). Dort sind beispielsweise einer Pressenstraße Doppelarm-Industrieroboter zugeordnet, die zwischen den Pressen stehen und Karosserieteile, die von einer zur anderen Presse gebracht werden sollen, durch Schwenkung ihres Doppelarmes entsprechend umsetzen.

Aus der DE-OS 19 43 927 sind auch Umsetzeinrichtungen in der Form von Drehtischen bekannt.

Aus der DE 39 18 235 A1 ist eine Anordnung für Transferlinien bei Bearbeitungsmaschinen mit öffen- und schließbaren Förderzangen bekannt, mit denen die taktweise Weitergabe der Werkstücke von einer Station zur nächsten erfolgt. Um unterschiedlich lange Bearbeitungszeiten einzelner Stationen auszugleichen, hat man dort eine parallel zur getakteten Transferebene verlaufende zweite Bearbeitungsebene vorgesehen. Nach zwei oder mehr Taktschritten der Transferebene werden zwei oder mehr Werkstücke aus der Transferebene gleichzeitig an die länger arbeitenden Stationen in der parallelen zweiten Bearbeitungsebene gebracht. Die Hin- und Rückgabe der weiter zu bearbeitenden und der schon weiterbearbeitenden Werkstücke erfolgt dabei mittels zwischen den beiden ebenen angeordneten Umsetzmitteln zwischen den Taktschritten und jeweils nach zwei oder mehreren Taktschritten unabhängig von diesen. Der Transport der Werkstücke in der Transferebene erfolgt dabei mittels Förderzangen, deren Anzahl der Gesamtzahl der Bearbeitungsstationen in der Transferlinie entspricht. Zum Umsetzen von der Transferlinie in die zweite Bearbeitungsebene sind Schwenkzangen vorgesehen.

Bei allen diesen bekannten Transferstraßen oder Transfermaschinen, bei denen die Werkstücke oder Werkstückträger von einer ersten über alle anderen zu einer letzten Station transportiert werden, müssen insbesondere dann, wenn Werkstückträger verwendet werden, diese nach ihrem Durchlauf wieder zur ersten Station zurückbefördert werden, um erneut in das System eingetaktet zu werden. Dabei kann dies mit Rundtaktmaschinen in einfacher Weise dadurch erreicht werden, daß dort die letzte Station der ersten Station direkt benachbart ist. Nachteil einer solchen Rundtaktmaschine ist aber die in Abhängigkeit vom Kreisdurchmesser festgelegte Stationszahl, die keine Flexibilität hinsichtlich ihrer zahlenmäßigen Vergrößerung oder Verkleinerung zuläßt. Außerdem werden dort Werkstückträger häufig in Überzahl gebunden, da die Stationszahl der Rundtaktmaschine größer sein kann als die Anzahl produktiver Arbeitsstationen. Schließlich ist dort die Zugänglichkeit wegen der geschlossenen runden Form eingeschränkt.

Bei Transferstraßen mit einem linearen Transfer (DE 39 18 235 A1) wurde bei Transfermaschinen, bei der die letzte Station von der ersten Station einen Abstand hat, der etwa der Maschinenlänge entspricht, dagegen ein Rücktransport von Werkstückträgern organisiert, der bei den bekannten Bauarten auf anderem Weg erfolgt als der Hintransport. Die dafür erforderliche Transporteinrichtung führt zu einer Verdoppelung des Transportweges und damit zu einer zahlenmäßigen Vergrößerung der im Umlauf befindlichen Werkstückträger.

Der vorliegenden Erfindung liegt die Aufgabe zugrunde, den Rücktransport von Werkstücken, oder von Werkstückträgern, so zu gestalten, daß gesonderte Transporteinrichtungen und damit auch zusätzliche Werkstückträger überflüssig werden.

Nach dem erfindungsgemäßen Verfahren wird diese Aufgabe durch die kennzeichnenden Merkmale des Patentanspruchs 1 gelöst. Die Erfindung nützt dabei den Umstand aus, daß durch die Schwenkbewegung der doppelarmigen Umsetzmittel nicht nur ein Werkstück oder Werkstückträger von einer Station zur anderen befördert werden kann, sondern daß gleichzeitig gegenläufig auch ein zweites Werkstück oder ein Werkstückträger in der Gegenrichtung bewegt werden kann, und daß man auf diese Weise, wenn jeweils nur jedes zweite Umsetzmittel taktweise betätigt wird, den Hin- und Rücktransport mit den gleichen Mitteln erreichen kann. Eine Transporteinrichtung für den Rücktransport, die die Länge der Maschine bzw. der Straße aufweisen müßte, kann entfallen.

Zur Durchführung des erfindungsgemäßen Verfahrens hat sich eine Transferstraße oder Transfermaschine nach dem Oberbegriff des Patentanspruchs 2 als vorteilhaft erwiesen, bei der die Steuerung von den in einer fortlaufenden Reihe durchnumerierten Doppelarmen pro Transfertakt zum Umsetzen der Werkstücke oder Werkstückträger wechselweise nur die gerade oder nur die ungerade numerierten Doppelarme zum Einsatz bringt.

In Weiterbildung dieser Ausgestaltung können die Doppelarme Drehungen ausführen, deren Drehpunkte zwischen je zwei Stationen liegen. Alle Drehpunkte können außerdem auf einer Geraden liegen und die Werkstücke oder Werkstückträger können auf den Stationen durch Supporte gehalten werden, die eine Bewegungsfreiheit in Richtung der durch zwei benachbarte Drehpunkte beschriebenen Geraden haben.

Die Erfindung ist anhand eines Ausführungsbeispiels in der Zeichnung dargestellt und wird im folgenden erläutert. Es zeigen.
- Fig. 1: ein Beispiel einer erfindungsgemäßen Transfermaschine mit drei Arbeitsstationen und mit einer Ein- und einer Ausgangsstation,
- Fig. 2a und 2b: den sequenziellen Ablauf des erfindungsgemäßen Verfahrens, das mit der in der Fig. 1 gezeigten Transfermaschine durchgeführt werden kann und
- Fig. 3: einen als Umsetzmittel verwendeten Doppelarm nach der Erfindung, der mit Befestigungsmitteln jeweils zum Erfassen der umzusetzenden Werkstückträger versehen ist.

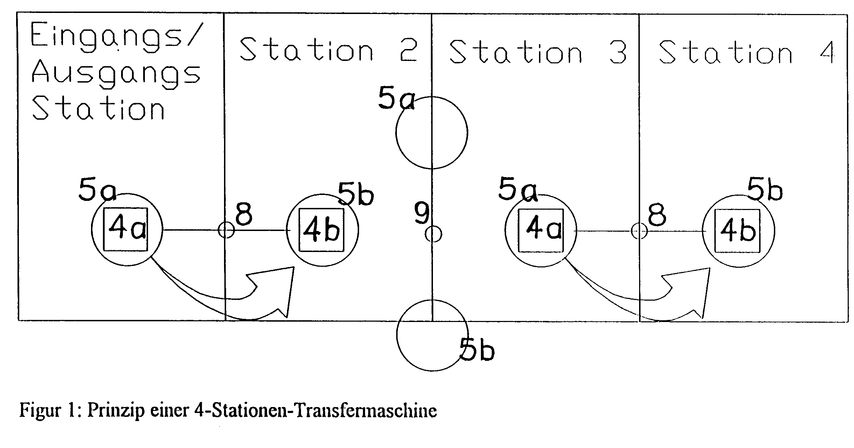

Zum paarweisen und wechselseitigen Umsetzen zwischen zwei benachbarten Stationen nehmen die Doppelarme in Figur 1 in Wechselbewegung (8) an beiden Enden ein Werkstück oder einen Werkstückträger (5a, 5b) mit Werkstück (4a, 4b) auf. Darauf führen sie eine Drehung um 180° aus und setzen die Werkstücke oder Werkstückträger (5a, 5b) wieder ab. Der benachbarte Doppelarm (9) ist währenddessen in Parkposition, d.h. er verrichtet keine Arbeit.

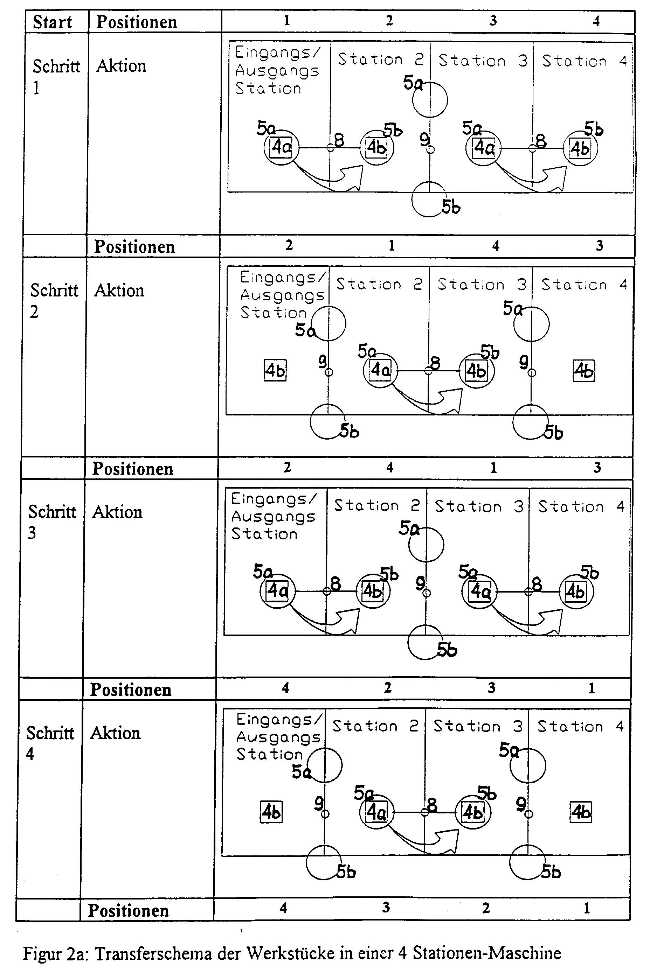

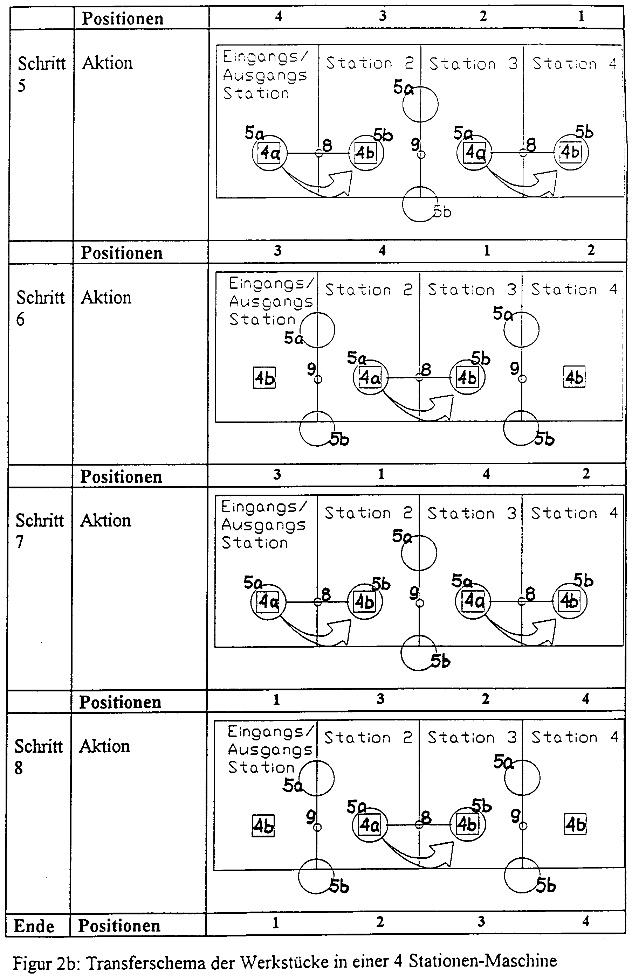

Aus den Grundelementen "Doppelarm in Wechselposition (8) und "Doppelarm in Parkposition" (9) wird der komplette Maschinentransfer aufgebaut. Sein sequenzieller Ablauf für alle Teile ist in Figur 2 am genannten Beispiel dargestellt. In der Zeile "Zustand der Werkstückpositionen" ist die jeweilige Lage der durchnumerierten Werkstücke auf den Stationen genannt. In der Zeile "Aktion" wird der aktuelle Umsetzvorgang angegeben, an dem entweder der erste und der letzte Doppelarm beteiligt sind oder der mittlere Doppelarm beteiligt ist. Nach acht Schritten haben alle Teile die Linie durchlaufen. In der Eingangs/Ausgangsstation können während der 2., 4., 6. und 8. Aktion Teile aus- und eingeschleust werden. Um den Fluß beispielhaft nachvollziehen zu können, ist das Werkstück 1 grau markiert.

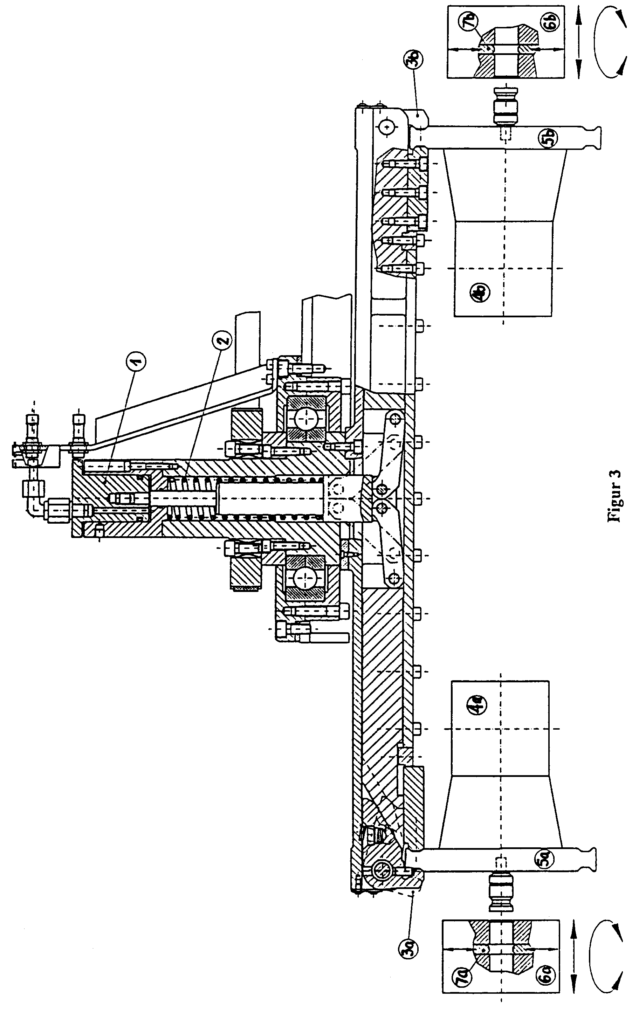

Ein konkretes Ausführungsbeispiel der Umsetztechnik ist in Figur 3 angegeben. Es besteht aus einem Doppelarm des Typs (8 oder 9) und zwei Werkstückträgern (5a, 5b) mit den Werkstücken (4a, 4b), die auf je einer Station mittels eines steuerbaren Mechanismus vorübergehend befestigt sind. An den Enden des Doppelarms ist je eine Zange (3a, 3b) angebracht, die durch eine Feder (2) geschlossen und mittels eines Zylinders (1) geöffnet wird. Auf jeder Station sind die Mechanismen mit den Werkstückträgern (5a, 5b) auf einem in Transferrichtung verfahrbaren und um seine vertikale Achse drehbaren Support (6a, 6b) gehalten. In der Zeichnung ist der Doppelgreifer mit zwei Werkstückträgern bereit, die 180°-Drehung auszuführen.

Zum Wechselbetrieb wird der Doppelarm aus der Parkstellung in die Stellung "Doppelarm in Wechselbewegung" gefahren. Dabei werden seine geöffneten Zangen (3a, 3b) in die Paßnuten der beteiligten Transportpaletten geführt und anschließend geschlossen. Nun werden die Werkstückträger durch Öffnen des Mechanismus (7a, 7b) auf den beteiligten Stationen freigegeben und die Werkstückträgeraufnahmen (6a, 6b) durch die genannte lineare Bewegungsfreiheit zurückgezogen. Jetzt ist der in der Zeichnung dargestellte Zustand erreicht. Darauf wird der Doppelarm um 180° gedreht. Nach beendeter Drehung werden die Werkstückträgeraufnahmen (6a, 6b) an die getauschten Werkstückträger (5a, 5b) wieder herangefahren und geschlossen. Die Zangen (3a, 3b) des Doppelarms werden geöffnet, um die Werkstückträger (5a, 5b) freizugeben, und der Doppelarm wird abschließend in Parkposition zurückgefahren. Zum folgenden Transferschritt werden die beiden Supporte (6a, 6b) um 180° gedreht, so daß die beschriebene Konstellation bezüglich der beiden benachbarten Doppelarme entsteht.

Die Bewegung des Aus- und Einführens zwischen Werkstückträger (5a, 5b) und Werkstückträgeraufnahme (6a, 6b) oder zwischen Werkstück und Werkstückträger kann auch im Doppelarm integriert sein oder durch eine vertikale Hubbewegung des Doppelarms oder der Supporte (6a, 6b) ausgeführt werden, wenn die Werkstückträger (5a, 5b) horizontal angeordnet sind. Der für 4 Stationen beschriebene Ablauf ist für jede beliebige Anzahl Stationen in der Transferlinie möglich. Dabei muß in Erweiterung des Beispiels wechselweise jeder zweite Doppelarm zum Einsatz gebracht werden. Die entsprechende Ansteuerung geschieht vorzugsweise durch eine programmierbare Steuerung.

## Patentansprüche

1. Verfahren zum getakteten Transport von Werkstücken oder Werkstückträgern in Transferstraßen oder Transfermaschinen mit einer beliebigen Anzahl von in linearer Anordnung vorgesehenen Stationen, zwischen denen die Werkstücke oder Werkstückträger durch schwenkbare Doppelarme von einer Station zur anderen wechselseitig umgesetzt werden, dadurch gekennzeichnet, daß eine gemeinsame Eingangs- und Ausgangsstation vorgesehen ist und pro Transfertakt von den fortlaufend durchnumerierten Doppelarmen wechselweise nur die gerade oder ungerade numerierten Doppelarmen zum Einsatz kommen, so daß jeweils ein Doppelarm (8 bzw. 9) eine Wechselfunktion ausübt, während der benachbarte in einer Parkposition steht und der Hintransport der Werkstücke oder Werkstückträger von der ersten über alle folgenden zu einer beliebigen Station und der Rücktransport in umgekehrter Reihenfolge und mit umgekehrtem Ablauf durch dieselben Doppelarme erfolgt.

2. Transferstraße oder Transfermaschine mit mehreren Bearbeitungsstationen in linearer Anordnung, zwischen denen die Werkstücke (4a, 4b) oder Werkstückträger (5a, 5b) durch schwenkbare Doppelarme (8 bzw. 9) von einer Station zur anderen wechselseitig umgesetzt werden, wobei die Anzahl der Doppelarme um eins kleiner ist als die Anzahl der Stationen, sowie mit steuerbaren Befestigungsmitteln (3a, 3b) für die Werkstücke (4a, 4b) oder Werkstückträger (5a, 5b) und mit einer Steuerung, dadurch gekennzeichnet, daß eine gemeinsame Eingangs- und Ausgangsstation vorgesehen ist und die Steuerung von den in einer fortlaufenden Reihe durchnumerierten Doppelarmen (8 bzw. 9) pro Transfertakt wechselweise nur die gerade oder nur die ungerade numerierten Doppelarme zum Einsatz bringt.

3. Vorrichtung nach Anspruch 2, dadurch gekennzeichnet, daß die Doppelarme (8 bzw. 9) Drehungen ausführen, deren Drehpunkte jeweils zwischen zwei Stationen liegen.

4. Vorrichtung nach Anspruch 3, dadurch gekennzeichnet, daß alle Drehpunkte auf einer Geraden liegen.

5. Vorrichtung nach Anspruch 3, dadurch gekennzeichnet, daß die Werkstücke (4a, 4b) oder Werkstückträger (5a, 5b) auf den Stationen durch Supporte (6a, 6b) gehalten sind, die eine Bewegungsfreiheit in Richtung der durch zwei benachbarte Drehpunkte beschriebenen Geraden haben.

## Claims

1. A procedure for the phased transport of work pieces or work piece carriers in transfer lines or transfer machines with any number of stations in a linear arrangement between which the work pieces or work piece carriers are moved alternately from one station to another by means of pivoting double arms,
**characterised in that** a common input and output station is provided and that in each transfer phase of the consecutively numbered double arms either only the odd- or only the even-numbered double arms are used alternately so that each double arm (8 / 9) has an alternate function, while the neighbouring arm is in a parked position and the work pieces or work piece carriers are transported out from the first station through all the following stations to any given station and back in reverse order with the reverse procedure by means of the same double arm.

2. A transfer line or transfer machine with several machining stations in a linear arrangement between which the work pieces (4a, 4b) or the work piece carriers (5a, 5b) are moved alternately from one station to another by means of pivoting double arms (8 / 9), whereby the number of double arms is one less than the number of stations, and with controllable fixing means (3a, 3b) for the work pieces (4a, 4b) or work piece carriers (5a, 5b) and with a control device,
**characterised in that** a common input and output station is provided and that of a series of consecutively numbered double arms (8 / 9) the control device alternately uses either only the odd- or only the even-numbered double arms.

3. A device in accordance with Claim 2,
**characterised in that** the double arms (8 / 9) perform rotational movements, with points of rotation of which lie between two stations.

4. A device in accordance with Claim 3,
**characterised in that** all the points of rotation lie on a straight line.

5. A device in accordance with Claim 3,
**characterised in that** the work pieces (4a, 4b) or work piece carriers (5a, 5b) are held on the stations by supports (6a, 6b) which are free to move in the direction of the straight lines described by two neighbouring points of rotation.

## Revendications

1. Procédé pour transporter de façon cadencée des pièces à usiner ou des supports de pièces à usiner dans des chaînes transfert ou dans des machines transfert comportant un nombre quelconque de postes prévus selon une disposition linéaire et entre lesquels les pièces à usiner ou les supports de pièces à usiner sont déplacés alternativement par des bras doubles pivotants, d'un poste à l'autre, caractérisé en ce qu'il est prévu un poste commun d'entrée et de sortie et que seuls les bras doubles possédant des numéros pairs et les bras doubles possédant des numéros impairs parmi les bras doubles numérotés continûment sont utilisés alternativement lors de chaque cadence de transfert de sorte que respectivement un bras double (8 ou 9) exécute une fonction de changement alterné, tandis que le bras double voisin est dans une position rangée et que le transport aller des pièces à usiner ou des supports de pièces à usiner depuis le premier poste en passant par tous les postes suivants jusqu'à un poste quelconque et le transport de retour selon la séquence inverse et avec un déroulement inverse sont exécutés par les mêmes bras doubles.

2. Chaîne transfert ou machine transfert comportant plusieurs postes de traitement disposés selon une disposition linéaire et entre lesquels les pièces à usiner (4a, 4b) ou les supports (5a, 5b) des pièces à usiner sont déplacés alternativement d'un poste à l'autre par des bras doubles pivotants (8 ou 9), le nombre des bras doubles étant inférieur d'une unité au nombre des postes, et comportant des moyens de fixation commandables (3a, 3b) pour les pièces à usiner (4a, 4b) ou les supports (5a, 5b) des pièces à usiner, et une unité de commande, caractérisée en ce qu'il est prévu un poste commun d'entrée et de sortie et que l'unité de commande utilise alternativement, lors de chaque cycle de transfert, uniquement les bras doubles portant les numéros pairs ou les bras doubles portant les numéros impairs parmi les bras doubles (8 ou 9) numérotés selon une série continue.

3. Dispositif selon la revendication 2, caractérisé en ce que les bras doubles (8 ou 9) exécutent des rotations, dont les centres sont situés respectivement entre deux postes.

4. Dispositif selon la revendication 3, caractérisé en ce que tous les centres de rotation sont situés sur une droite.

5. Dispositif selon la revendication 3, caractérisé en ce que les pièces à usiner (4a, 4b) ou les supports (5a, 5b) des pièces à usiner sont retenus, dans les postes, par des supports (6a, 6b) qui possèdent une liberté de déplacement dans la direction des droites décrites par deux centres de rotation voisins.
